# EUROPEAN PATENT SPECIFICATION

(11) **EP 4 227 119 B1**
(45) Date of publication and mention of the grant of the patent: **25.11.2026**
(21) Application number: 22156178.0
(22) Date of filing: 10.02.2022
(51) Int. Cl.: B60C 19/00, B60C 19/12

(54) **TYRE CAVITY RESONANCE NOISE ABSORBER**
REIFENHOHLRAUMRESONANZGERÄUSCHABSORBER
ABSORBEUR DE BRUIT DE RÉSONANCE DE LA CAVITÉ D'UN PNEUMATIQUE

(43) Date of publication of application: 16.08.2023
(73) Proprietor: Bridgestone Europe NV/SA, 1930 Zaventem (BE)
(72) Inventor: ARENDS, Robin Frank, 00128 Roma (IT); BERNAL ORTEGA, Maria Del Mar, 00128 Roma (IT); EMILIANI, Marco, 00128 Roma (IT)
(74) Representative: Marks & Clerk LLP

(56) References cited:
- EP-A1- 2 397 314
- WO-A1-2021/071847
- JP-A- 2019 051 935
- JP-A- 2021 046 130

## Description

### FIELD

The present invention relates to the improvement of noise reduction and self-sealing in tyres.

### BACKGROUND

Tyres are used on a range of different vehicles under a range of different conditions. Under some operating conditions, tyres may generate undesirable levels of noise, which can negatively impact the experience of the driver or passengers. A noise absorbing, or reduction, layer may be installed on the inside of a tyre with the aim of reducing tyre noise.

Some tyres include a sealant layer designed to automatically seal punctures to the tyre. Such tyres may be referred to as "self-sealing" tyres. The sealant layer may be a viscous coating on the inside of the tyre. The purpose of the sealant layer is to maintain the integrity of the tyre in the event of a puncture, even when the puncturing object becomes dislodged from the tyre.

It has not been possible to provide a seal-sealing tyre with good noise absorption properties without prejudicing the sealing performance. The use of noise reduction layers with sealant layers poses a number of issues. The noise reduction layer can become stuck to the sealant layer, deforming the noise reduction layer and impeding its performance. This can occur, for example, if the tyre is impacted and forced to deform, thus compressing the noise reduction layer into the sealant layer.

Similarly, the noise reduction layer can become stuck to the sealant layer and prevent the sealant layer from flowing so as to seal a puncture. This can occur if a part of the noise reduction layer blocks the passage of the sealant layer into the puncture. Small parts of the noise reduction layer can become separated from the rest of the noise reduction layer and can be drawn into the puncture and prevent the sealant layer from sealing the puncture.

Reference is also drawn towards:
WO2021071847 that relates to self-sealing tires, a process for making said self-sealing tires and the use of a silicone composition cured via a condensation cure chemistry to form a self -sealing layer.
JP2019051935 that discloses a tire that can acquire acoustic absorption effect for cavernous resonance for a long time by suppressing heat generation and deterioration in an acoustic absorption material due to use.
JP2021046130 that discloses a pneumatic tire which inhibits deterioration of puncture resistance.
EP2397314 that relates to a method for making a tire having a foam noise damper.

### SUMMARY

It has been found that tyres according to the present invention overcome the disadvantages associated with the prior art. Tyres according to the invention provide improved noise reduction performance, without prejudicing self-sealing performance. Tyres as described herein achieve improved noise reduction and sealing performance without the need for increased complexity of the internal design of the tyre cavity.

The invention is defined by a tyre according to claim 1.

The tyre may be a pneumatic tyre such as those used on vehicles including cars, light goods vehicles and heavy goods vehicles. The tyre may be for mounting on a hub and filling with pressurised air. The bead portion may be at the radially-innermost side of the tyre. The bead portion may be configured to provide rigidity to the tyre and allow its mounting on a wheel hub. The tread portion may comprise a tread on its outer surface for engaging a road surface and providing grip. The sidewall portion may comprise two sidewall portions on opposing sides of the tread and extending between the tread portion and the bead portion.

The tyre may be a self-sealing tyre. The tyre may be configured to automatically seal punctures. The sealant layer may be configured to provide this self-sealing ability. The sealant layer may be configured to automatically seal punctures through the tread portion - for example punctures in the range of 0 to 5mm in diameter.

The sealant layer may comprise or consist of a viscous fluid configured to flow into a puncture or perforation in the tread portion and act to seal the puncture or perforation to prevent air loss through the puncture or perforation.

The sealant layer may be a homogeneous layer. The sealant layer may be formed of a single homogeneous composition. It may be configured to adhere (e.g. directly) to the tread portion and noise reduction layer.

The sealant layer may be in direct contact with the tyre tread portion and the silicon foam noise reduction layer.

The sealant layer is sandwiched between the tread portion and the silicone foam noise reduction layer without intermediary.

The tyre may not comprise a separate adhesive layer, for example in addition to the sealant layer and the silicone foam noise reduction layer.

The tyre may comprise only the sealant layer and silicone foam noise reduction layer in the inner cavity of the tyre.

This arrangement of the sealant layer and noise reduction layer eliminates the need for a separate adhesive or supporting layer and greatly simplifies the structure of the tyre.

The sealant layer may have a viscosity of between 50-1000 Pa*s (Pascal-seconds (Nsm⁻²)) at 100°C. The sealant layer may have a viscosity greater than 50, 100, 200, 400, 600 or 800 Pa*s; and/or the sealant layer may have a viscosity less than 1000, 800, 600, 400, 200 or 100 Pa*s at 100°C.

The viscosity being measured according to ASTM D5099.

The sealant layer may have a layer thickness of between 1 and 6mm. The sealant layer may have a thickness greater than 1mm, 2mm, 3mm, 4mm or 5mm; and/or the sealant layer may have a thickness less than 6mm, 5mm, 4mm, 3mm or 2mm.

The sealant layer may have a tackiness of 0.1 to 25 N. The sealant layer may have a tackiness greater than 0.1, 2, 5, 10, 15 or 20 N; and/or the sealant layer may have a tackiness less than 25, 20, 15, 10, 5, 2 or 0.1 N.

The tackiness being measured with the Probe Tack Test with a plunger diameter between 25 and 30mm and a probe with 30mm diameter, a pre-load of 0.5 N, a dwell time of 30 seconds and a detachment speed of 2000 mm/min.

The sealant layer may comprise or consist of a rubber-based material. The sealant layer may be a compound sealant layer.

The sealant layer may comprise, or consist of, a butyl rubber (i.e. any butylic rubber), a plasticizer and a tackifier resin. The butyl rubber may be a halobutyl rubber.

The sealant layer may comprise a butyl rubber. The sealant layer may comprise 100 to 400 PHR of a plasticizer (PHR meaning parts per hundred parts of rubber). The sealant layer may comprise 10 to 80 PHR of a tackifier resin.

The sealant layer may comprise or consist of butyl rubber, 100 to 400 PHR of a plasticizer and 10 to 80 PHR of a tackifier resin.

The term PHR refers to the proportion of constituents with reference to 100 parts of rubber. For example, 50 PHR of a component requires 50 parts of that component for every 100 parts rubber. The PHR may be based on weight or volume.

During use, as the road surface impacts the tread portion of the tyre, the air inside the cavity and/or the tyre itself may be caused to vibrate. In tyres without a noise reduction layer, this vibration may transfer to the interior of the vehicle as noise. This noise may be in the frequency band of 200 to 250 Hz. For tyres of rim diameter higher than 19 inch the frequency band may shift to frequencies below 200Hz like 170 to 220 Hz or 160 to 210 Hz.

The tyre has a noise reduction layer. The noise reduction layer is a silicon foam noise reduction layer.

Surprisingly, it has been found that the use of a silicone foam for a noise reduction layer overcomes the disadvantages associated with existing arrangements using PU (polyurethane) or EPDM (ethylene propylene diene monomer) foams. A silicone foam noise reduction layer provides good noise adsorption while allowing the proper functioning of the sealant due to its low tackiness.

The silicone foam noise reduction layer is a cellular silicone foam with an open cell structure. The use of an open cell structure improves adhesion of the noise reduction layer to the sealant layer.

The use of an open cell structure allows mechanical adhesion to take place - that is, the sealant may infiltrate the open-cell structure of the silicone foam, holding the silicone foam in place within the tyre. This may be achieved without significant adhesion of the sealant to the surface of the silicone foam itself - that is, the silicone foam may not prevent the sealant from flowing, and thus the sealant may be free to flow into a puncture to perform its sealing function.

The silicone foam noise reduction layer may have a range of operating temperatures from -40°C to over 150°C. This may be as measured according to the ASTM D 1056 standard.

The silicone foam noise reduction layer has a density of less than 105 kg/m³. The silicone foam noise reduction layer has a density of less than 60 kg/m³. This is measured according to the ASTM D 1056 standard.

The silicone foam noise reduction layer has a tensile strength of greater than 70 kPa. This is measured according to the ASTM D 412 standard.

The silicone foam noise reduction layer has an ultimate elongation of greater than 40%. This is measured according to the ASTM D 412 standard.

The silicone foam noise reduction layer has a compression set of less than 5%. The silicone foam noise reduction layer may have a compression set of less than 2%. This is measured according to the ASTM D 1056 standard.

The silicone foam noise reduction layer may have a temperature resistance of -40 to +150°C. The silicone foam noise reduction layer may have a temperature resistance of -40 to +100°C. This may be measured according to the ASTM D 1056 standard.

The silicone foam noise reduction layer may have a width of 50 to 150mm. The width may be measured in a direction parallel to the axis of rotation of the tyre.

The silicone foam noise reduction layer may have a thickness of 15 to 40mm, 15 to 30mm, 20 to 35mm or 25 to 30mm. The thickness may extend in a radial direction of the tyre.

The silicone foam noise reduction layer may extend over 80 to 100% or 90 to 100% of the tyre inner circumference.

The silicone foam noise reduction layer may be cuboidal. The silicone foam noise reduction layer may have a triangular or trapezoidal cross-section. The silicone foam noise reduction layer may be tapered. The silicone foam noise reduction layer may have a varying width or thickness around the circumference of the tyre. The silicone foam noise reduction layer may have an undulating thickness or width around the circumference of the tyre.

The silicone foam noise reduction layer may located centrally on the sealant layer. The silicone foam noise reduction layer may be located centrally and symmetrically about the central plane of the tyre. This may improve the balance of the tyre.

Further according to the invention is a vehicle comprising a tyre as described herein.

### DETAILED DESCRIPTION

Figure 1 is a partial cross-sectional view of a tyre with a sealant layer and a silicone foam noise reduction layer; and
Figure 2 is a graph showing the absorption performance of tyres over a range of frequencies.

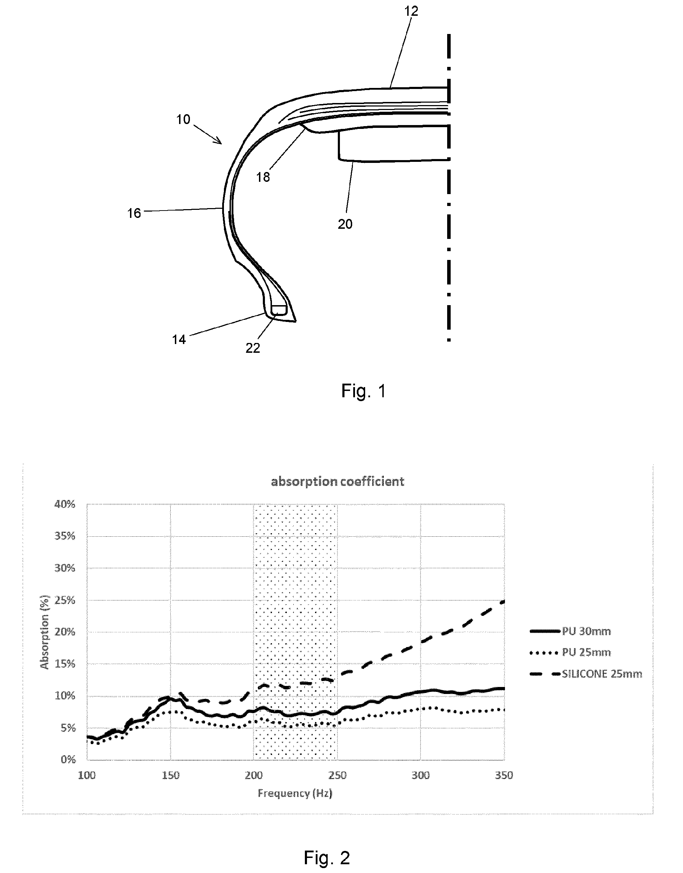

Turning now to Figure 1, a cross-section of a tyre 10 is shown. The tyre 10 is a pneumatic tyre of the type used on cars and other vehicles. Figure 1 is a partial cross-sectional view, showing one side of the tyre 10.

The tyre 10 comprises a tread portion 12 arranged to engage a road surface. The tread portion 12 is arranged at the outer radial side of the tyre 10. The tyre 10 also comprises a bead portion 14. The bead portion 14 is arranged at an inner radial side of the tyre 10. The bead portion 14 is arranged to connect the tyre to a hub or wheel (not shown). The tyre 10 also comprises a sidewall portion 16. The sidewall portion 16 extends between, and connects, the tread portion 12 and the bead portion 14. The tread portion 12, bead portion 14 and sidewall portion 16 collectively define an inner cavity of the tyre 10. The cavity of the tyre is pressurised during use.

The tread portion 12 comprises tread designed to engage and grip a road surface during use. A sealant layer 18 is arranged on an inner surface of the tread portion 12. The sealant layer 18 is arranged to cover at least a portion, or in some cases substantially the entire, inner surface of the tread 12. The sealant layer 18 is configured to repair damage caused to the tread 12 during use, for example by punctures.

The sealant layer 18 achieves this due to the physical properties of the layer, which has a viscosity and tackiness such that it is able to flow into a puncture or perforation in the tread 12 and seal the puncture to prevent loss of pressure in the tyre 10. The sealant layer 18 can act to seal punctures up to 5mm, even once the object puncturing the tyre is dislodged.

The sealant used to form the sealant layer 18 has tack properties that guarantees adhesion to both the inside of the tread portion 12 of the tyre 10 and the noise reduction layer 20, without the need for an additional adhesive layer. This means there are only two layers, not three, on the inside of the tyre tread 12.

Example properties of a sealant material suitable for use as a sealant layer providing adequate sealing performance are shown in Table 1 below.

**Table 1**

| | Viscosity (Pa*s) at 100 °C | Layer thickness (mm) | Tackiness (N) |
|---|---|---|---|
| Sealant | 50 - 1000 | 1 - 6 | 0.1 - 25 |

In some examples the tackiness may be between 5 and 20 N.

The bead portion 14 comprises a strengthening member 22 located inside a cavity formed in the bead portion 14, for example to provide strength and rigidity to the tyre 10.

The sidewall portion 16 comprises a sidewall on either side of the tyre 10.

The tyre 10 further includes a noise reduction layer 20. The noise reduction layer 20 is located on the sealant layer 18 such that the sealant layer 18 is sandwiched between the tread portion 12 and the noise reduction layer 20. In the present example, the noise reduction layer 20 is located centrally with respect to the centre-plane of the tyre 10 - this has been found to improve the balance and rotational stability of the tyre 10. In the example of Figure 1, the noise reduction layer 20 extends over the majority of the sealant layer 18 (e.g. in a direction parallel to the axis of rotation of the tyre and/or the circumferential direction). In other examples, the noise reduction layer 20 may extend over the entire sealant layer 18 or extend over a smaller fraction of the sealant layer 18.

In the present examples, a substantially cuboidal noise reduction layer 20 is used. Such an arrangement may be convenient as it may allow the noise reduction layer 20 to be produced and transported in rolls. However, in other examples alternative geometries of noise reduction layer may be employed. For example, the noise reduction layer may have a triangular or trapezoidal cross-section, or may comprise surface undulations or variations in thickness parallel to the radius of the tyre.

The noise reduction layer 20 is configured to absorb vibrations of the tyre 10 during use and thereby damp vibrational noise of the tyre 10. This noise is generated by air in the tyre 10 being vibrated by an external input, such as the road surface contacting and deforming the tread portion 12 of the tyre. Typically called tyre cavity noise, the majority of this excitation and noise is within the frequency band of 200 Hz to 250 Hz.

In the present examples the noise reduction layer 20 is made of a silicone foam. Silicone foam has low sticking properties while also having good noise reduction characteristics. This means that silicone foam provides good noise absorption properties and, critically, does not interfere with the sealing properties of the sealant layer. As such, the use of silicone foam provides a tyre 10 with both good self-sealing and noise reduction performance.

The example of Figure 1 uses an open cell silicone foam as the noise reduction layer 20. The use of an open cell silicone foam allows the sealant material to penetrate inside the open cell structure of the silicone foam and thus achieve "mechanical adhesion", wherein the silicone foam is locked to the sealant due to the infiltration of the sealant within the foam structure. This can improve overall adhesion in both the lateral and radial directions, without the sealant adhering to surfaces of the foam per se. This minimises movement of the foam, even during large deformations of the tyre 10. However, the sealant is still free to flow with respect to the silicone foam and, as such, sealing properties are largely unaffected.

A low density silicone foam is used and this reduces the overall weight of the tyre.

Sealing tests were conducted on tyres with sealant only, sealant with a PU foam noise reduction layer and sealant with a silicone foam noise reduction layer and the results are shown in Table 2 below.

Test conditions were as follows for the indoor test:
Tyre size: 215/65 R17; inflation pressure 2.5 bar; test speed 100km/h; tyre load 500kg; test drum diameter 2m; test room temperature 38°C.
Test conditions were as follows for the outdoor test:
   Tyre size: a.) 215/65 R17 and b.) 235/55 R19 ; inflation pressure 2.5 bar; test speed 100km/h; tyre load 500 kg; test vehicle VW Tiguan or equivalent in same compact SUV segment; ambient temperature range 1 between -25°C and -5°C (tested with tyre size a.)) and ambient temperature range 2 between 20°C nd 40°C (tested with tyre size b.)).

The criteria for passing the tests was a minimum remaining inflation pressure of 1.8 bar in the tyre after 1000km of running with nails in the tread and then after removal of the nails running additional 400km and 14 days of storag. As can be seen, the use of a silicone foam noise reduction layer results in good sealing performance, whereas the use of a PU foam noise reduction layer does not. The reason for this is that the PU foam noise reduction layer suffers from the disadvantages discussed herein - namely it can interfere with the operation of the sealant layer and thereby prevent adequate sealing properties. The silicone foam noise reduction layer, however, does not interfere with the performance of the sealant layer.

**Table 2**

| | Indoor sealing test (on drum) | | | Outdoor sealing tests | | |
|---|---|---|---|---|---|---|
| | Sealant only | Sealant & PU foam | Sealant & Silicone foam | Sealant only | Sealant & PU foam | Sealant & Silicone foam |
| 6 x Nail 5mm | Pass | Fail | Pass | Pass | Fail | Pass |
| 6 x Nail 4mm | N/A | N/A | N/A | Pass | Fail | Pass |
| 6 x Nail 3mm | N/A | N/A | N/A | Pass | Fail | Pass |

Turning now to Figure 2 and Table 3 below, the absorption of the use of a 25mm thick silicone foam noise reduction layer is compared to a similar 25mm and 30mm PU foam noise reduction layer of the same width and length. Figure 2 plots the noise absorption rates over the frequency range 100 to 350 Hz for the three noise reduction layers. Table 3 below shows representative values of the noise reduction over the range of 200 to 250 Hz - which is the main frequency range for noise caused by tyre cavity vibrations. It can be seen that the silicone foam noise reduction layer not only outperforms a PU noise reduction layer with corresponding dimensions, but also a larger PU noise reduction layer.

The absorption is measured according to ISO 10534-2.

**Table 3**

| Absorption 200Hz~250Hz | | |
|---|---|---|
| PU | PU | Silicone |
| 25 mm | 30 mm | 25 mm |
| 5.8% | 7.4% | 10.5% |

Table 4 sets out the noise level in decibels during an outdoor road test. Said outdoor road test is a so-called in-vehicle noise test performed driving at constant speed on rough road with a vehicle in the compact SUV segment; indicated values in dB(A) are arithmetically averages values between measurements of microphones positioned at driver's left eat and passenger's right ear; test tyre size was 235/55 R19.

The results for a silicone foam noise reduction layer having a 25mm thickness are compared to those of a corresponding tyre with a 30mm PU foam noise reduction layer. The results are shown as reductions in decibel levels with respect to an identical tyre without any foam noise reduction layer. As can be seen, a silicone foam noise absorption layer is significantly more effective than a PU foam noise absorption layer.

**Table 4**

| Noise level 200Hz~250Hz | | | |
|---|---|---|---|
| | No foam | PU foam | SILICONE foam |
| | | 30 mm | 25 mm |
| AVERAGE | Control | -1.2 dB(A) | -1.7 dB(A) |
| 50KPH | Control | -1.7 dB(A) | -2.5 dB(A) |
| 80KPH | Control | -0.8 dB(A) | -0.9 dB(A) |

The increased performance of a silicon foam noise reduction layer opens the door to the reduction in noise reduction layer thicknesses in tyres.

Silicone foam suitable for use as noise reduction layers may have a wide range of operating temperatures (e.g. from -40 to +100°C or +150°C). The silicone foam may also have a low compression set value, for example less than 5%, or more preferably less than 2%.

An example silicone foam suitable for use in the silicone foam noise reduction layer is the Rogers^{®} MF1-35^{®}.

Suitable properties of a silicone foam for use as a silicone foam noise reduction layer are provided in Table 5.

**Table 5**

| **Property** | **Test method** | **Value** |
|---|---|---|
| Foam type | --- | Silicone Foam open cells |
| Density [kg/m3] | ASTM D 1056 | < 105, (preferably <60 kg/m3) |
| Tensile Strength [kPa] | ASTM D 412 | > 70 |
| Ultimate elongation [%] | ASTM D 412 | > 40 % |
| Compression Set (%) | ASTM D 1056 | < 5 %(preferably < 2%) |
| Temperature resistance | ASTM D 1056 | -40 to +200 deg. Celsius |
| Format in tire: | -- | Width: 100-150 mm |
| | | Thickness: 25-30 mm |
| | | 90%-100% Length tire inner circumference |

The indicated values of compression set provide a material which can revert to its initial shape after being compressed by a load. This is good, as it allows the silicone foam to largely revert to its initial thickness and shape after deformation.

The present invention has been described above purely by way of example. Modifications in detail may be made to the present invention within the scope of the claims as appended hereto. Furthermore, it will be understood that the invention is in no way to be limited to the combination of features shown in the examples described herein. Features disclosed in relation to one example can be combined with features disclosed in relation to a further example without departing from the scope defined in the appended claims.

## Claims

1. A tyre comprising:
a tread portion (12);
a bead portion (14); and
a sidewall portion (16) extending between the bead portion (14) and the tread portion (12);
wherein the tread portion (12), bead portion (14) and sidewall portion (16) define an inner cavity of the tyre;
the tyre further comprising:
a sealant layer (18) arranged on the tread portion (12) of the tyre in the inner cavity of the tyre; and
a silicone foam noise reduction layer (20) arranged on the sealant layer (18) in the inner cavity of the tyre,
wherein the silicone foam noise reduction layer (20) is a cellular silicone foam with an open cell structure;
wherein the silicone foam noise reduction layer (20) has:
a density of less than 60 kg/m³ measured according to the ASTM D 1056 standard;
a tensile strength of greater than 70 kPa measured according to the ASTM D 412 standard;
an ultimate elongation of greater than 40% measured according to the ASTM D 412 standard;
a compression set of less than 5% measured according to the ASTM D 1056 standard;
wherein the sealant layer (18) is sandwiched between the tread portion (12) and the silicone foam noise reduction layer (20) without intermediary.

2. The tyre of claim 1, wherein the silicone foam noise reduction layer (20) has a range of operating temperatures from -40°C to over 150°C.

3. The tyre of any of the preceding claims, wherein the silicone foam noise reduction layer (20) has
a temperature resistance of -40 to +200°C measured according to the ASTM D 1056 standard.

4. The tyre of any of the preceding claims, wherein the silicone foam noise reduction layer (20) has a compression set of less than 2%.

5. The tyre of any of the preceding claims, wherein the silicone foam noise reduction layer (20) has a width of 50-150mm; a thickness of 15-30mm; and/or extends over 90-100% of the tyre inner circumference.

6. The tyre of any of the preceding claims, wherein the silicone foam noise reduction layer (20) is located centrally on the sealant layer (18).

7. The tyre of any of the preceding claims, wherein the sealant layer (18) is formed of a single homogeneous composition and is configured to adhere to the tread portion (12) and noise reduction layer (20).

8. The tyre of any of the preceding claims, wherein the tyre comprises only the sealant layer (18) and silicone foam noise reduction layer (20) in the inner cavity of the tyre.

9. The tyre of any of the preceding claims, wherein the tyre does not comprise a separate adhesive layer, for example in addition to the sealant layer (18) and the silicone foam noise reduction layer (20).

10. The tyre of any of the preceding claims, wherein the sealant layer (18) has a viscosity of between 50-1000 Pa*s at 100°C measured according to ASTM D5099; a layer thickness of between 1-6mm; and/or a tackiness of 0,1-25 N, wherein the tackiness is measured with the Probe Tack Test with a plunger diameter between 25 and 30mm and a probe with 30mm diameter, a pre-load of 0.5 N, a dwell time of 30 seconds and a detachment speed of 2000 mm/min.

11. The tyre of any of the preceding claims, wherein the sealant layer (18) comprises a butyl rubber, a plasticizer and a tackifier resin.

12. A vehicle comprising a tyre according to any of the preceding claims.

## Patentansprüche

1. Reifen, umfassend:
einen Laufflächenabschnitt (12);
einen Wulstabschnitt (14); und
einen Seitenwandabschnitt (16), der sich zwischen dem Wulstabschnitt (14) und dem Laufflächenabschnitt (12) erstreckt;
wobei der Laufflächenabschnitt (12), Wulstabschnitt (14) und Seitenwandabschnitt (16) einen inneren Hohlraum des Reifens definieren;
der Reifen ferner umfassend:
eine Abdichtungsschicht (18), die auf dem Laufflächenabschnitt (12) des Reifens in dem inneren Hohlraum des Reifens angeordnet ist; und
eine Silikonschaumgeräuschreduktionsschicht (20), die auf der Abdichtungsschicht (18) in dem inneren Hohlraum des Reifens angeordnet ist,
wobei die Silikonschaumgeräuschreduktionsschicht (20) ein zellulärer Silikonschaum mit einer offenzelligen Struktur ist;
wobei die Silikonschaumgeräuschreduktionsschicht (20) aufweist:
eine Dichte von weniger als 60 kg/m³, gemessen gemäß dem Standard ASTM D 1056;
eine Zugfestigkeit von mehr als 70 kPa, gemessen gemäß dem Standard ASTM D 412;
eine Reißdehnung von mehr als 40 %, gemessen gemäß dem Standard ASTM D 412;
einen Druckverformungsrest von weniger als 5 %, gemessen gemäß dem Standard ASTM D 1056;
wobei die Abdichtungsschicht (18) zwischen dem Laufflächenabschnitt (12) und der Silikonschaumgeräuschreduktionsschicht (20) ohne Zwischenlage sandwichartig angeordnet ist.

2. Reifen nach Anspruch 1, wobei die Silikonschaumgeräuschreduktionsschicht (20) einen Betriebstemperaturbereich von -40 °C bis über 150 °C aufweist.

3. Reifen nach einem der vorstehenden Ansprüche, wobei die Silikonschaumgeräuschreduktionsschicht (20) aufweist
eine Temperaturbeständigkeit von -40 bis +200 °C, gemessen gemäß dem Standard ASTM D 1056.

4. Reifen nach einem der vorstehenden Ansprüche, wobei die Silikonschaumgeräuschreduktionsschicht (20) einen Druckverformungsrest von weniger als 2 % aufweist.

5. Reifen nach einem der vorstehenden Ansprüche, wobei die Silikonschaumgeräuschreduktionsschicht (20) eine Breite von 50-150 mm aufweist; eine Dicke von 15-30 mm; und/oder sich über 90-100 % des Reifeninnenumfangs erstreckt.

6. Reifen nach einem der vorstehenden Ansprüche, wobei sich die Silikonschaumgeräuschreduktionsschicht (20) mittig auf der Abdichtungsschicht (18) befindet.

7. Reifen nach einem der vorstehenden Ansprüche, wobei die Abdichtungsschicht (18) aus einer einzigen homogenen Zusammensetzung ausgebildet ist und konfiguriert ist, um an dem Laufflächenabschnitt (12) und der Geräuschreduktionsschicht (20) zu haften.

8. Reifen nach einem der vorstehenden Ansprüche, wobei der Reifen nur die Abdichtungsschicht (18) und Silikonschaumgeräuschreduktionsschicht (20) in dem inneren Hohlraum des Reifens umfasst.

9. Reifen nach einem der vorstehenden Ansprüche, wobei der Reifen keine separate Haftschicht umfasst, zum Beispiel zusätzlich zu der Abdichtungsschicht (18) und der Silikonschaumgeräuschreduktionsschicht (20).

10. Reifen nach einem der vorstehenden Ansprüche, wobei die Abdichtungsschicht (18) eine Viskosität zwischen 50-1000 Pa*s bei 100 °C, gemessen gemäß ASTM D5099, aufweist; eine Schichtdicke zwischen 1-6 mm; und/oder eine Klebrigkeit von 0,1-25 N, wobei die Klebrigkeit mit dem Probe-Tack-Test mit einem Stempeldurchmesser zwischen 25 und 30 mm und einer Sonde mit 30 mm Durchmesser, einer Vorlast von 0,5 N, einer Verweilzeit von 30 Sekunden und einer Ablösegeschwindigkeit von 2000 mm/min gemessen wird.

11. Reifen nach einem der vorstehenden Ansprüche, wobei die Abdichtungsschicht (18) einen Butylkautschuk, einen Weichmacher und ein Klebrigmacherharz umfasst.

12. Fahrzeug, umfassend einen Reifen nach einem der vorstehenden Ansprüche.

## Revendications

1. Pneumatique comprenant :
une portion de bande de roulement (12) ;
une portion de talon (14) ; et
une portion de paroi latérale (16) s'étendant entre la portion de talon (14) et la portion de bande de roulement (12) ;
dans lequel la portion de bande de roulement (12), la portion de talon (14) et la portion de paroi latérale (16) définissent une cavité interne du pneumatique ;
le pneumatique comprenant en outre :
une couche d'étanchéité (18) agencée sur la portion de bande de roulement (12) du pneumatique dans la cavité interne du pneumatique ; et
une couche de réduction de bruit en mousse de silicone (20) agencée sur la couche d'étanchéité (18) dans la cavité interne du pneumatique,
dans lequel la couche de réduction de bruit en mousse de silicone (20) est une mousse de silicone cellulaire avec une structure à cellules ouvertes ;
dans lequel la couche de réduction de bruit en mousse de silicone (20) a :
une densité inférieure à 60 kg/m³ mesurée selon la norme ASTM D 1056 ;
une résistance à la traction supérieure à 70 kPa mesurée selon la norme ASTM D 412 ;
un allongement à la rupture supérieur à 40 % mesuré selon la norme ASTM D 412 ;
une déformation rémanente à la compression inférieure à 5 % mesurée selon la norme ASTM D 1056 ;
dans lequel la couche d'étanchéité (18) est prise en sandwich entre la portion de bande de roulement (12) et la couche de réduction de bruit en mousse de silicone (20) sans élément intermédiaire.

2. Pneumatique selon la revendication 1, dans lequel la couche de réduction de bruit en mousse de silicone (20) a une plage de températures de fonctionnement allant de -40 °C à plus de 150 °C.

3. Pneumatique selon l'une quelconque des revendications précédentes, dans lequel la couche de réduction de bruit en mousse de silicone (20) a
une résistance à la température allant de -40 à +200 °C mesurée selon la norme ASTM D 1056.

4. Pneumatique selon l'une quelconque des revendications précédentes, dans lequel la couche de réduction de bruit en mousse de silicone (20) a une déformation rémanente à la compression inférieure à 2 %.

5. Pneumatique selon l'une quelconque des revendications précédentes, dans lequel la couche de réduction de bruit en mousse de silicone (20) a une largeur allant de 50 à 150 mm ; une épaisseur allant de 15 à 30 mm ; et/ou s'étend sur 90 à 100 % de la circonférence interne du pneumatique.

6. Pneumatique selon l'une quelconque des revendications précédentes, dans lequel la couche de réduction de bruit en mousse de silicone (20) est située au centre sur la couche d'étanchéité (18).

7. Pneumatique selon l'une quelconque des revendications précédentes, dans lequel la couche d'étanchéité (18) est formée d'une composition homogène unique et est conçue pour adhérer à la portion de bande de roulement (12) et à la couche de réduction de bruit (20).

8. Pneumatique selon l'une quelconque des revendications précédentes, dans lequel le pneumatique comprend uniquement la couche d'étanchéité (18) et la couche de réduction de bruit en mousse de silicone (20) dans la cavité interne du pneumatique.

9. Pneumatique selon l'une quelconque des revendications précédentes, dans lequel le pneumatique ne comprend pas de couche adhésive séparée, par exemple en plus de la couche d'étanchéité (18) et de la couche de réduction de bruit en mousse de silicone (20).

10. Pneumatique selon l'une quelconque des revendications précédentes, dans lequel la couche d'étanchéité (18) a une viscosité comprise entre 50 et 1 000 Pa * s à 100 °C mesurée selon la norme ASTM D5099 ; une épaisseur de couche comprise entre 1 et 6 mm ; et/ou une pégosité allant de 0,1 à 25 N, dans lequel la pégosité est mesurée par le test de probe-tack avec un diamètre de piston compris entre 25 et 30 mm et une sonde avec un diamètre de 30 mm, une précontrainte de 0,5 N, un temps de maintien de 30 secondes et une vitesse de détachement de 2 000 mm/min.

11. Pneumatique selon l'une quelconque des revendications précédentes, dans lequel la couche d'étanchéité (18) comprend un caoutchouc butyle, un plastifiant et une résine tackifiante.

12. Véhicule comprenant un pneumatique selon l'une quelconque des revendications précédentes.
